Europäisches Patentamt

European Patent Office

Office européen des brevets

(19)

(11)  EP 0 709 126 B1

(12)  **EUROPEAN PATENT SPECIFICATION**

(45) Date of publication and mention
of the grant of the patent:
**30.05.2001  Bulletin 2001/22**

(51) Int Cl.7: **B01D 53/64**, C22B 43/00

(21) Application number: **95500126.8**

(22) Date of filing: **15.09.1995**

(54) **Continuous procedure for the simultaneous collection and precipitacion of mercury in gases containing it**

Kontinuierliches Verfahren zum gleichzeitigen Auffangen und Abscheiden von Quecksilber aus Gasen

Procédé en continu pour collecter et précipiter simultanément du mercure présent dans un gaz

(84) Designated Contracting States:
**AT BE CH DE DK FR GB GR IE IT LI LU NL PT SE**

(30) Priority:  **26.10.1994  ES 9402220**

(43) Date of publication of application:
**01.05.1996  Bulletin 1996/18**

(73) Proprietor: **ASTURIANA DE ZINC, S.A.**
**E-33417 Asturias (ES)**

(72) Inventors:
 • **Sitges Menendez, Fernando**
  **E-33400 Salinas-Castrillon (Asturias) (ES)**
 • **Alvarez Tamargo, Francisco**
  **E-33440 Luanco (Asturias) (ES)**

 • **Tamargo Garcia, Francisco**
  **E-33400 Salinas-Castrillon (Asturias) (ES)**
 • **Rodriguez Valcarcel, Matias**
  **E-33450 Piedras Blancas-Castrillon (ES)**
 • **Muruzabal Sitges, Covadonga**
  **E-33400 Salinas-Castrillon (Asturias) (ES)**

(74) Representative: **Davila Baz, Angel**
**c/o Clarke, Modet & Co.,**
**Goya, 11**
**28001 Madrid (ES)**

(56) References cited:
**EP-A- 0 064 962**    **EP-A- 0 476 079**
**DE-B- 1 075 953**    **ES-A- 411 067**
**ES-A- 451 533**    **ES-A- 556 731**
**FR-A- 2 216 357**    **GB-A- 1 431 651**

**Description**

This invention generally relates to a procedure to separate mercury from gases containing it and, more specifically, to a continuous procedure for the simultaneous collection and precipitation in a single stage of the gaseous mercury contained in those gases.

The are many processes in which gases containing mercury are given off, not only in mercury production factories, but also in other processes such as the obtention of chlorine by the alkaline process, and in calcination, sintering, scrap metal recuperation processes and at plants where sulphured minerals are roasted to fabricate $SO_2$ and $H_2SO_4$, or for the recovery of metals such as lead, copper, zinc, etc.

The gases with high mercury content are treated for their purification either dry: decanters, electrostatic precipitators, etc., or wet: washing and cooling, wet electrofilters, etc., but despite these measures the gas, due to the high mercury vapor pressure, may contain significant mercury quantities, for example, a gas cooled down to 30° C may contain up to 30 mg/m$^3$N.

Both for environmental reasons, if the gases are sent off to the atmosphere, as to prevent contamination of the products manufactured using these gases, it is necessary to effect a thorough purification in order to bring down the mercury content below 0.05 mg/m$^3$N.

The state of the art includes the knowledge of a number of methods used to depurate said gases.

Thus, German patent 1,075,953 describes the use, to that end, of filters with solid materials, such as coal.

The Spanish patent 451,533 uses the wet method for washing using certain solutions, to which end a two stage process is used, one to collect the mercury through washing in a tower with an aqueous solution of a complex of mercury complex and another stage in which part of the tower liquid is extracted so as to regenerate it by oxidizing and precipitating part of the mercury.

Spanish patents 411,067, 556,731 and 9000643 claim a process of purification of roasting gases in which mercury is oxidized with the $SO_2$ itself contained in the gas.

Furthermore, patent 9000643 claims that said process is effected in two stages using two washing towers with an aqueous solution containing thiocyanates and active coal, with a wet electrofilter between them.

The processes of the prior technique described with reference to the Spanish patents number 411,067, 556,731 and 9000643 are applicable only to gases containing $SO_2$.

This invention provides now a procedure for the collection and recovery of the mercury contained in combustion gases, roasting gases and other gases containing mercury in gaseous state, through direct precipitation of the mercury in the form of mercuric sulfide.

The procedure of the invention has only one stage and takes place in just one tower, the procedure consisting of passing the gas containing mercury through a washing tower where hydrogen sulfide (gas) is injected continuously or intermittently at the same time that it is washed with a solution containing a complex of mercury (II) stable in acid medium, such as $[I_4Hg]^{2-}$ or $[(SCN)_4Hg]^{2-}$, without requiring the use of an additional oxidant.

Therefore, and in accordance with the above statements, the invention provides a procedure to separate Hg from gases containing it comprising contacting said gases, in a single washing tower, with a solution containing a complex of Hg (II) stable in acid medium and optionally containing active carbon in suspension, characterized in that the collection and precipitation of Hg as mercuric sulfide and the regeneration of the complex of Hg (II) takes place simultaneously by the injection of gaseous $H_2S$ in said washing tower.

Conveniently the gas temperature at the tower entrance must not be greater than 50 °C.

Pursuant to the invention, the collection and precipitation of the mercury takes place according to a number of reactions in which mercurious compounds are formed which are immediately oxidized and precipitated as mercuric sulfide. These reactions may be summarized as follows.

$$Hg^0 + [I_4Hg]H_2 -> I_2Hg_2 + 2HI \qquad [1]$$

$$I_2Hg_2 + 2HI + H_2S -> [I_4Hg]H_2 + HgS + H_2 \qquad [2]$$

$$Hg^0 + [I_4Hg]H_2 + H_2S -> [I_4Hg]H_2 + HgS + H_2 \qquad [3]$$

In case of using thiocyanate as complexing anion, the reactions would be the same substituting the $SCN^-$ for $I^-$.

As may be observed in the reaction above, the concentration of the mercuric complex remains unaltered if the injection of hydrogen sulfide is effected in a controlled way, due to which is not necessary to extract the liquid from the tower to regenerate it as the state of the art required up to now.

The addition of hydrogen sulfide is easy to control, given that it is sufficient to analyze the Hg (II) in solution and maintain it at a previously fixed concentration.

If iodide anion is used as a complexing agent, the Hg (II) concentration must then be kept between 0.3 and 1.0 g/l, whereas it must be kept between 3 and 10 g/l if thiocyanate anion is used as a complexing agent. It is possible to work with larger Hg (II) concentrations but it is not advisable, both from the financial point of view, given that a greater complexing anion concentration would then be required, and from the practical point of view, given that the purified gas may be contaminated if the washing solution with high mercury content is drawn off.

The complexing anion concentration must be greater than the stoichiometric quantity to fonm the complex of mercury (II) so as to prevent the intermediate mercurious compounds from becoming stable.

The washing solution must be slightly acid and as the acidity is not modified during the process, it is sufficient to add 2 g/l of $H_2SO_4$ when initially preparing the washing solution.

Notwithstanding this, the use of greater acid concentration does not decrease the efficiency of the system.

In some cases, whenever the mercury content in the gas is high, the reaction of the dismutation:

$$I_2Hg_2 + 2HI \rightarrow [I_4Hg]H_2 + Hg^0 \downarrow \qquad [4]$$

may be faster than the oxidation and precipitation reaction [2]. Active carbon that adsorbs the $Hg^\circ$ and facilitates its oxidation and precipitation may be used to prevent the $Hg^\circ$ coming off.

The procedure of the invention is characterized by its simplicity, given that the whole process takes place in just one stage, using a single washing tower.

In order to illustrate the invention in greater detail, reference is made now to the enclosed drawing, which shows a scheme of execution of the procedure according to the invention.

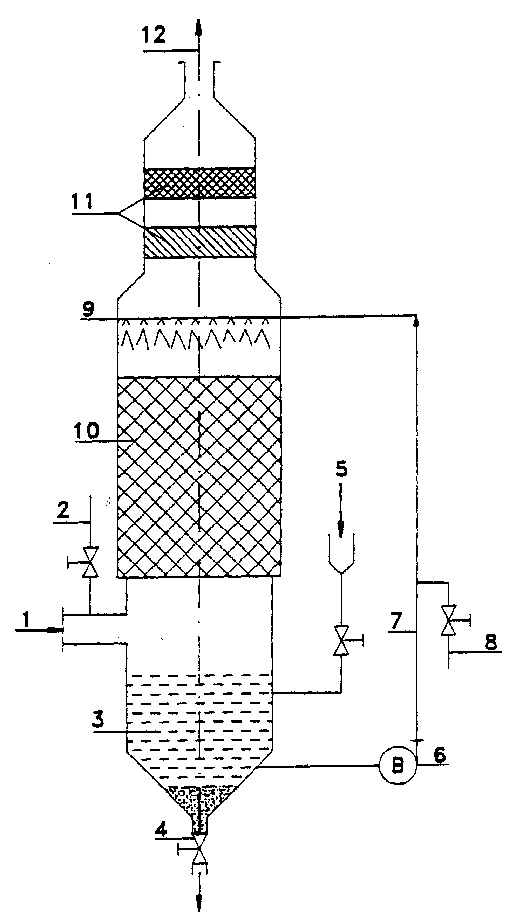

As shown in figure 1, the tower has an inlet for gases containing mercury (1), a $H_2S$ (gas) injector (2), a tank containing the, washing solution (3), fitted with a purging outlet (4) to extract solids containing mercury and an inlet (5) through which reactives are introduced. The liquid is impelled using the pump (6) through the pipe (7), fitted with a sampling valve, (8), toward the device (9) watering the interior (10) of the tank. The gas crossing the tower passes through a drop separator (11) and comes out, already purified of mercury, through the conduit (12).

The procedure of the invention presents clear advantages over current state of the art processes, among which advantages the following may be emphasized:

-  The process takes place in just one stage and only requires a washing tower. Spanish patent 9000643 claims the use of two washing towers and a wet electrofilter placed between the two towers.
-  It is not necessary for the gases to be purified to contain $SO_2$ to oxidize elemental mercury, as stated in Spanish patents 411,067, 556.731 and 9000643. Because of this, the present invention is applicable not only to gases resulting from roasting sulfurized minerals, but also to other type of gases containing mercury.
-  Neither a second stage to regenerate the solution nor the use of an additional oxidizing agent are required, as claimed in Spanish patent 451,533.

The injection of $H_2S$ (gas) in the washing tower itself is the key of the process according to the invention, given that its addition

-  Does not modify the washing liquid volume, given that it is injected in a gaseous state.
-  Does not modify the concentration of ions in solution, given that the sulphur precipitates forming mercury (II) sulfide and the hydrogen supplied is compensated by that given off by the oxidation of elemental mercury and acidity does therefore remain constant.
-  Does not modify the concentration of the complex of mercury (II) as may be observed in the reaction [3].

As a consequence of this, it is not necessary to extract liquid from the tower to regenerate it, as claimed in Spanish patent 451,533. It is only necessary to purge the solids that contain the precipitated mercury and to compensate the mechanical losses of reactives. The $H_2S$ (gas) is the only product consumed in the reaction and in very small quantities, 0.17 kg of $H_2S$ per kg of purified Hg.

Next, the procedure of the invention shall be described with reference to the following example, which must be considered as merely illustrative in respect of the scope of the invention and under no circumstances must they be interpreted as limiting the invention in any way.

Example 1

A current of $N_2$ saturated in Hg° at 20° C (15 mg Hg°/m$^3$N) maintaining a 30 l/h flow rate, together with 7 l/h of another current of $N_2$ containing 9 ppm of $H_2S$ was made to flow through a washing vessel containing a solution of 0.5 g/l of Hg (II), 3 g/l of I$^-$ and 5 g/l of $H_2SO_4$. These conditions were maintained over 120 hours, the outlet gas was analyzed and the concentration at all times was lower than 0.05 mg/m$^3$N.

Example 2

In a tower as that shown in figure 1 were treated 50.000 m$^3$N/h of gas coming from a blende roasting oven containing 7% of $SO_2$ and a Hg$^0$ content of 25mg/m$^3$. The gas entered the tower at a temperature of 30° C. The $H_2S$ injection was 140 l N/h. The washing solution contained 8 g/l of Hg(II), 13 g/l of SCN$^-$, 10 g/l of $H_2SO_4$ and 2 g/l of active coal. The purified gas at the tower outlet contained 0.03 mg of Hg$^0$/m$^3$N. This gas was used to manufacture sulfuric acid and the mercury content in the acid was lower than 0.5 ppm.

**Claims**

1.   A continuous process for the simultaneous collection and precipitation of gaseous mercury from gases containing it, said gases, in a single washing tower, with a solution containing a complex of Hg (II) stable in acid medium, and optionally containing active coal in suspension, characterized in that the collection and precipitation of the Hg as mercuric sulfide and the regeneration of the complex of Hg (II) takes place simultaneously and in one stage only by the injection of gaseous hydrogen sulfide in said washing tower, wherein the amount of hydrogen sulfide injected in the tower is the stoichiometric one corresponding to the amount of mercury in the gas.

2.   A process according to claim 1, characterized in that the amount of hydrogen sulphur injected is regulated by the analysis of the Hg (II) contained in the washing solution.

3.   A process according to claim 1, characterized in that the anions forming a complex with the mercury (II) are preferably the thiocyanate anion to form the complex $[(SCN)_4Hg]^{2-}$, or the iodine anion to form the complex $[I_4Hg]^{2-}$.

4.   A process according to claims 1 and 3, characterized in that the quantity of mercury in solution is at least of 3.0 g/l whenever the thiocyanate anion is used as the mercury (II) chelating agent.

5.   A process according to claims 1 and 3, characterized in that the amount of mercury in solution is of at least 0.3 g/l whenever the iodine anion is used as the mercury (II) chelating agent.

6.   A process according to claim 1, characterized in that the concentration of the anion forming the complex with the mercury (II) is greater than the stoichiometric amount required to form the complex.

**Patentansprüche**

1.   Kontinuierliches Verfahren zur gleichzeitigen Sammlung und Ausfällung von gasförmigem Quecksilber aus quecksilberhaltigen Gasen durch Kontaktierung der Gase in einem einzigen Waschturm mit einer einen in saurem Medium beständigen Hg(II)-Komplex und gegebenenfalls Aktivkohle in suspendiertem Zustand enthaltenden Lösung, **dadurch gekennzeichnet,** dass die Sammlung und Ausfällung des Quecksilbers als Hg(II)-sulfid und die Gewinnung des Hg(II)-Komplexes gleichzeitig und auf einer Stufe lediglich durch Einspritzen von gasförmigem Schwefelwasserstoff in den Waschturm erfolgen, wobei die Menge des in den Turm eingespritzten Schwefelwasserstoffs die der Quecksilbermenge im Gas entsprechende stöchiometrische Menge ist.

2.   Verfahren nach Anspruch 1, **dadurch gekennzeichnet,** dass die eingespritzte Schwefelwasserstoffmenge durch die Analyse des in der Waschlösung enthaltenen Hg(II) gesteuert wird.

3.   Verfahren nach Anspruch 1, **dadurch gekennzeichnet,** dass die mit Hg(II) einen Komplex bildenden Anionen zur Bildung des $[(SCN)_4Hg]^{2-}$-Komplexes vorzugsweise Thiocyanat-Anionen oder zur Bildung des $[I_4Hg]^{2-}$-Komplexes vorzugsweise Iod-Anionen sind.

4. Verfahren nach einem der Ansprüche 1 und 3, **dadurch gekennzeichnet,** dass die Quecksilbermenge in der Lösung wenigstens 3,0 g/l beträgt, wenn als Hg(II)-Komplexbildner Thiocyanat-Anionen verwendet werden.

5. Verfahren nach einem der Ansprüche 1 und 3, **dadurch gekennzeichnet,** dass die Quecksilbermenge in der Lösung wenigstens 0,3 g/l beträgt, wenn als Hg(II)-Komplexbildner Iod-Anionen verwendet werden.

6. Verfahren nach Anspruch 1, **dadurch gekennzeichnet,** dass die Konzentration der mit Hg(II) den Komplex bildenden Anionen größer ist als die für die Bildung des Komplexes erforderliche stöchiometrische Menge.

**Revendications**

1. Procédé continu pour la collecte et la précipitation simultanées de mercure gazeux à partir de gaz le contenant, comprenant la mise en contact desdits gaz, dans une unique tour de lavage, avec une solution contenant un complexe de Hg (II) stable dans un milieu acide, et contenant de manière facultative du charbon actif en suspension, caractérisé en ce que la collecte et la précipitation du Hg en tant que sulfure mercurique et la régénération du complexe de Hg (II) ont lieu simultanément et en une seule étape par l'injection de sulfure d'hydrogène gazeux dans ladite tour de lavage, dans lequel la quantité de sulfure d'hydrogène injectée dans la tour est la quantité stoechiométrique correspondant à la quantité de mercure dans le gaz.

2. Procédé selon la revendication 1, caractérisé en ce que la quantité de sulfure d'hydrogène injectée est régulée par l'analyse du Hg (II) contenu dans la solution de lavage.

3. Procédé selon la revendication 1, caractérisé en ce que les anions formant un complexe avec le mercure (II) sont, de préférence, l'anion thiocyanate pour former le complexe $[(SCN)_4Hg]^{2-}$, ou l'anion iode pour former le complexe $[I_4Hg]^{2-}$.

4. Procédé selon les revendications 1 et 3, caractérisé en ce que la quantité de mercure en solution est d'au moins 3,0 g/l toutes les fois que l'anion thiocyanate est utilisé en tant qu'agent formant le chélate de mercure (II).

5. Procédé selon les revendications 1 et 3, caractérisé en ce que la quantité de mercure en solution est d'au moins 0,3 g/l toutes les fois que l'anion iode est utilisé en tant qu'agent formant le chélate de mercure (II).

6. Procédé selon la revendication 1, caractérisé en ce que la concentration de l'anion formant le complexe avec le mercure (II) est supérieure à la quantité stoechiométrique nécessaire pour former le complexe.